Europäisches Patentamt

European Patent Office

Office européen des brevets

(19)

(11) Veröffentlichungsnummer : **0 122 329**
**B1**

(12) **EUROPÄISCHE PATENTSCHRIFT**

(45) Veröffentlichungstag der Patentschrift :
25.03.87

(51) Int. Cl.⁴ : **F 16 L 33/02**

(21) Anmeldenummer : 83111981.3

(22) Anmeldetag : 29.11.83

(54) **Ringförmige Schlauchklemme.**

(30) Priorität : **23.03.83 DE 8308550 U**

(43) Veröffentlichungstag der Anmeldung :
**24.10.84 Patentblatt 84/43**

(45) Bekanntmachung des Hinweises auf die Patenterteilung : **25.03.87 Patentblatt 87/13**

(84) Benannte Vertragsstaaten :
**AT BE CH DE FR GB IT LI NL SE**

(56) Entgegenhaltungen :
**DE-C- 1 068 963**
**DE-U- 7 532 092**
**DE-U- 7 541 277**
**GB-A- 1 046 710**
**US-A- 1 522 013**
**US-A- 3 537 147**

(73) Patentinhaber : **Jurid Werke GmbH**
**Glinder Weg 1**
**D-2057 Reinbek (DE)**

(72) Erfinder : **Fehrmann, Ernst-Peter**
**Eichenbusch 58**
**D-2057 Reinbek (DE)**
Erfinder : **Valentin, Wolfgang**
**Breiter Kamp 6**
**D-2056 Glinde (DE)**

(74) Vertreter : **Patentanwälte Dipl.-Ing. J. Richter Dipl.-Ing. F. Werdermann**
**Neuer Wall 10**
**D-2000 Hamburg 36 (DE)**

EP 0 122 329 B1

## Beschreibung

Die Erfindung betrifft eine ringförmige Schlauchklemme aus einem Blechstreifen oder einem anderen geeigneten Werkstoff, der zu einem über den Schlauch schiebbaren Ring mit mindestens einer ohrenförmigen Ausbiegung von etwa quadratischem oder rechteckförmigem Querschnitt und mit einem den Schlauch unterhalb der Ausbiegung überdeckenden Klemmenteil zusammengebogen ist, dessen freies Ende an der Innenwandfläche des Ringes verschieblich gehalten ist, wobei das freie Ende des die Ausbiegung tragenden Klemmenteiles mit dem Ringkörper fest verbunden ist, und dessen beide Ränder seitlich schräg nach außen verlaufen.

Nach der DE-A-1 068 963 besteht eine Schlauchklemmbride aus zwei selbständigen, zu einem Ring zusammensetzbaren Teilen, wobei der eine Teil aus einem dem jeweiligen Schlauchumfang angepaßten Abschnitt eines beliebig langen, in regelmäßigen Abständen gelochten Metallbandes besteht, während der andere Teil aus einem mit mindestens einer zusammendrückbaren Ausbuchtung versehenen Metallband als brückenartiges Verschlußglied ausgebildet ist, dessen beide Enden mit Krallen in Löcher der beiden Enden des um den Schlauch geschlungenen Bandabschnittes eingreifen. Durch eine derart ausgebildete Schlauchklemmbride soll das Halten einer großen Anzahl von Modellen unnötig gemacht werden. Es genügt, lediglich eine Rolle Bridenband und einige Verschlußglieder zur Hand zu haben, um unabhängig von der Größe des Schlauchdurchmessers die Bride zusammenzustellen und auf einfachste Weise aufzumontieren. Nachteilig ist jedoch dabei, daß neben einem in regelmäßigen Abständen gelochten Bridenband in dessen Lochungen einsetzbare steg- bzw. brückenartige Verschlußglieder benötigt werden, so daß immer zwei Teile auf Vorrat gehalten werden müssen.

Nach dem DE-U-6 609 619 ist eine ringförmige Klammer zur Erzeugung einer Klemmwirkung auf Schläuche od. dgl. bekannt, die in der Längsrichtung einen gleichmäßigen Durchmesser aufweisen und auf welchen die Klammer in offenen Zustand gleiten kann, die ein einziges, zusammendrückbares, nach Art von auf einer Seite offenem Rechteck ausgebildetes Ohr aufweist, wobei der Innendurchmesser der Klammer im offenen Zustand mindestens annähernd dem Außendurchmesser des Schlauches entspricht, so daß die offene Klammer über einen großen Teil ihres Umfanges bereits auf dem Schlauch satt anliegt. Das die Klammer bildende Band ist nicht als geschlossener Ring ausgebildet, sondern an einer Stelle offen, die ungefähr diametral gegenüber der vorgefertigten, ohrenförmigen Ausbiegung liegt. Um dieses Klemmband zu schließen, werden die freien Enden durch eine Schnalle gezogen und in entgegengesetzten Richtungen flach umgebogen. Anschließend wird die ohrförmige Ausbiegung mittels einer Beißzange zusammengepreßt, nachdem die Schlauchklemme auf dem zu befestigen Schlauch aufgesetzt ist. Durch Zusammenpressen der ohrenförmigen Ausbiegung werden Kompressionskräfte erzeugt, so daß der auf einem Rohr od. dgl. zu befestigende Schlauch auf dem Rohr sicher gehalten ist.

Aus dem DE-U-1 939 411 ist eine Schlauchbride für Schläuche und Röhren aus Plastik oder ähnlichem Material bekannt, die aus einem Blechstreifen besteht, der zu einem offenen Ring zusammengebogen und in der Umfangsrichtung mit einer nach innen gerichteten Sicke versehen ist, wobei dieser Ring als Zwischenring zwischen Schlauchbride und Plastikschlauch zwischengelegt und dadurch beim Zusammenziehen der Bride der Schlauch auf dem Rohrstück, entlang dem Druckbereich der Sicke, festgeklemmt wird. Zum Befestigen eines Schlauches auf einem Rohrstück wird hiernach neben einer Schlauchbride ein Zwischenring benötigt, der die in Umfangsrichtung verlaufende und nach innen gerichtete Sicke aufweist.

Darüber hinaus ist aus der DE-A-858 173 eine Schlauchklemme bekannt, die aus einem geschlossenen, über den Schlauch geschobenen und dort faltig gepreßten Ring besteht. Diametral an gegenüberliegenden Stellen des Ringes ist je eine Falte vorgesehen. Derartige Schlauchklemmen können nur in Verbindung mit besonderen Einrichtungen angebracht werden. Das Herauspressen von Falten aus der als glatter, geschlossener Ring mit wenig Spiel über den Schlauch geschobenen Schlauchklemme erfolgt mittels einer hierfür geeigneten Preßeinrichtung, damit ein Druck auf einen großen Teil des Ringumfanges in im wesentlichen radialer Richtung ausgeübt und unmittelbar auf fast alle Stellen des Umfanges übertragen werden kann.

Nach der DE-A-1 806 247 ist eine ringförmige Schlauchklemme mit zwei oder mehr ohrenförmigen Ausbiegungen und den Schlauch unterhalb der Ausbiegung überdeckenden Klemmteilen bekannt, die aus einander gleichen, an ihrem einen Ende die Ausbiegung aufweisenden Teilstücken zusammengesetzt ist, wobei das zweite Ende des einen Teilstückes den Schlauch unterhalb der Ausbiegung des anderen Teilstückes überdeckt. Diese Schlauchklemme besteht aus einem Metallband, dessen scharfe Ränder nach dem Anlegen und Anziehen der Schlauchklemme in den zu haltenden Schlauch einschneiden und diesen somit beschädigen.

Eine ringförmige Schlauchklemme der eingangs genannten Art ist aus der DE-U-7 541 277 bekannt. Bei dieser Schlauchklemme ist der unterhalb der ohrenförmigen Ausbiegung liegende Bandteil zungenartig gegenüber der Bandbreite verschmälert und erstreckt sich mit seinem Ende in eine im oben liegenden Teil des Bandes nach radial außen gedrückte, auf der vom Bandende abgewandten Seite der Ausbiegung beginnende Sicke.

Die Sicke im Klemmenband ist ein wesentliches Merkmal, da die zungenartige Verschmälerung des einen Endes des Klemmenbandes in dieser Sicke zur Anlage kommt, so daß ein stufenloser Übergang von der zungenartigen Verschmälerung zur Innenwandfläche des Klemmenbandes gegeben ist. Die Sicke erstreckt sich dabei über die gesamte Länge des Klemmenbandes. Die sich von den Sickenrändern zu den Rändern des Klemmenbandes erstreckenden Seitenteile sind derart abgewinkelt, daß diese miteinander einen stumpfen Winkel einschließen. Aufgrund dieser Ausgestaltung werden scharfkantige Flächen geschaffen, die sich beim Anziehen des Klemmenbandes in das Material des zu befestigenden Schlauches einpressen, so daß Materialbeschädigungen nicht auszuschließen sind. Hinzu kommt, daß auch die Endbereiche der Ränder des Klemmenbandes keine besondere Ausgestaltung aufweisen, aufgrund der eine Materialbrüchigkeit des Schlauches im Schlauchklemmenbefestigungsbereich vermieden wird. Mit der zungenartigen Verschmälerung an dem im Bereich der seitlichen Öffnung der ohrenförmigen Ausbiegung des Klemmenbandes liegenden Klemmenbandendes soll ein Einquetschen des zu befestigenden Schlauches bei einem Zusammendrücken der Ausbiegung vermieden werden. Dadurch, daß diese Schlauchklemme eine sich in Klemmenbandlängsrichtung erstreckende Sicke aufweist und die sich an die Sicke zu beiden Seiten anschliessenden Ränder des Klemmenbandes abgewinkelt sind, wird keine große Anlagefläche des Klemmenbandes an einem zu befestigenden Schlauch erreicht.

Nachteilig bei den bekannten Schlauchklemmen ist, daß diese nach dem Anlegen und Anziehen an einen insbesondere elastischen Schlauch den Schlauch mit ihren umlaufenden Rändern einschneiden und es somit leicht in diesen Bereichen zu einer Materialbrüchigkeit kommen kann, insbesondere dann, wenn beispielsweise der Schlauch Schwingungen ausgesetzt ist, wie dies beispielsweise bei zu Kühlern von Kraftfahrzeugen führenden Schläuchen der Fall ist. Dieses Einschneiden der Schlauchklemmen in das Schlauchmaterial wird noch dadurch gefördert, daß die umlaufenden Ränder der aus einem Blechmaterial bestehenden Schlauchklemmen scharfkantig sind.

Die Erfindung löst die Aufgabe, eine die Schläuche schonende, ringförmige, eine ohrenförmige Ausbiegung aufweisende Schlauchklemme zu schaffen, mit der eine Materialbrüchigkeit des Schlauches im Schlauchklemmenbefestigungsbereich vermieden und deren ohrenförmige Ausbiegung noch zusätzlich versteift wird, so daß eine sich nicht im Laufe der Zeit vermindernde hohe Spannkraft erreicht wird und erhalten bleibt, sowie ein Zurückfedern der Schenkel der zusammengepreßten ohrenförmigen Ausbiegung vermieden wird.

Zur Lösung dieser Aufgabe wird eine ringförmige Schlauchklemme gemäß der eingangs genannten Art vorgeschlagen, die erfindungsgemäß in der Weise ausgebildet ist, daß zur Vermeidung einer Materialbrüchigkeit des Schlauches die beiden Ränder des Ringes unter Ausbildung eines etwa U-förmigen Querschnittprofils seitlich, schräg nach außen verlaufend aus der von dem Blechstreifen des Ringes gebildeten Ebene unter Ausbildung abgerundeter Übergangsbereiche zwischen den Ringrandabschnitten und dem Ringkörpersteg abgebogen sind, wobei die Enden der abgewinkelten Randabschnitte abgerundet ausgebildet sind.

Eine derart ausgebildete Schlauchklemme erbringt zwei wesentliche Vorteile : Zum einen erfolgt aufgrund der abgerundeten und seitlich hochgestellten Ränder der Schlauchklemme kein Einschneiden der Schlauchklemmenränder im angelegten Zustand der Schlauchklemme in den Schlauch, so daß es im Befestigungsbereich zu keiner Materialbrüchigkeit des Schlauches kommen kann, und zum anderen erfolgt durch die seitlich hochgestellten, sich bis in den Bereich der ohrförmigen Ausbiegung erstreckenden Ränder eine Versteifung dieser Ausbiegung, so daß nach dem Zusammenpressen der Schenkel der ohrenförmigen Ausbiegen eine hohe Spannkraft erhalten und auch diese über einen längeren Zeitraum aufrechterhalten wird, da insbesondere die seitlich hochgestellten Ränder im Bereich der ohrenförmigen Ausbiegung ein Zurückfedern der zusammengepreßten Schenkel der ohrenförmigen Ausbiegung verhindern. Ein Zurückfedern der zusammengepreßten ohrenförmigen Ausbiegung wird vermieden. Ein selbsttätiges Aufbauchen der zusammengepreßten Ausbiegung wird verhindert. Hinzu kommt noch, daß die Schlauchklemme aufgrund ihrer Ausgestaltung auch bei Schläuchen aus weichem elastischen Material verwendet werden kann, ohne daß es zu einer Materialzerstörung kommt.

Im folgenden wird der Gegenstand der Erfindung in den Zeichnungen erläutert. Es zeigt :

Figur 1 in einer Ansicht von vorn eine Schlauchklemme,

Figur 2 einen vergrößerten waagerechten Schnitt gemäß Linie II-II in Fig. 1 und

Figur 3 in einem waagerechten Schnitt einen Teilabschnitt eines Schlauches mit angelegter Schlauchklemme.

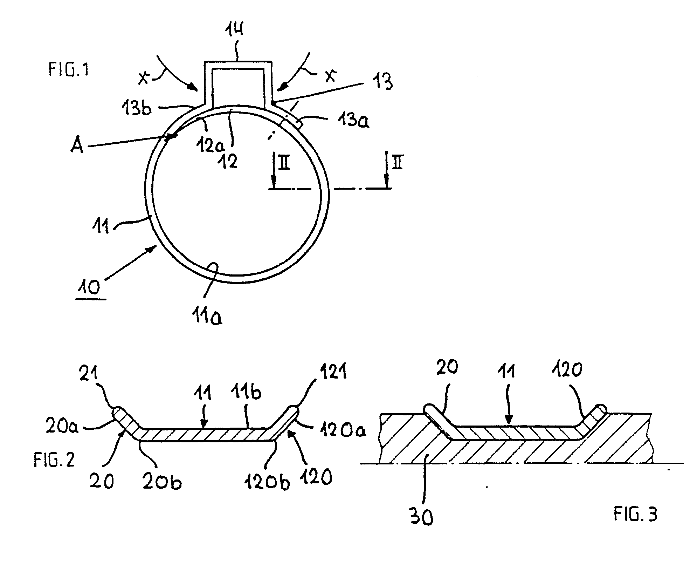

Die in Fig. 1 mit 10 bezeichnete Schlauchklemme besteht aus einem Streifen aus einem metallischen Werkstoff oder einem anderen geeigneten Werkstoff, der zu einem über einen Schlauch schiebbaren Ring 11 zusammengebogen ist. Die die beiden Klemmenteile 12, 13 bildenden Enden des Ringes 11 sind zueinander überlappend angeordnet. In dem Endbereich des Klemmenteiles 13 ist eine ohrenförmige Ausbiegung 14 ausgebildet, die einen etwa rechteckförmigen oder quadratischen Querschnitt aufweist. Das sich an die Ausbiegung 14 anschließende freie Ende 13a des Klemmenteiles 13 ist mit dem Ringkörper bei 15 fest verbunden. Als Verbindung kann eine Nietverbindung oder auch eine Punktverschweißung zur Anwendung gelangen. Das Klemmenteil 12 des Ringes 11 überdeckt den Schlauch unterhalb der Ausbiegung 14 und ist bis in den Bereich 13b des Ringes 11 geführt, mit diesem aber nicht fest verbunden. Das freie Ende 12a des Klemmenteiles 12 läuft in einen zungenartig und sich verjüngend ausgebildeten Abschnitt aus und bildet mit der Innenwandfläche 11a des Ringes 11 einen stufenlosen Übergang.

Die mit 20, 120 bezeichneten beiden Ränder des Ringes 11 sind, wie in Fig. 2 dargestellt, endseitig bei 21, 121 abgerundet und seitlich sowie schräg nach außen verlaufend abgebogen, so daß ein etwa U-förmiges Querschnittsprofil entsteht, dessen abgewinkelte Randabschnitte 20a, 120a die Ränder 20, 120 und einen Winkel zu dem den Steg 11b bildenden Abschnitt des Ringes 11 bilden.

Wird eine derart ausgebildete Schlauchklemme zur Befestigung eines in Fig. 3 mit 30 bezeichneten Schlauches verwendet, so erfolgt durch Einwirkung einer Preßwirkung in Richtung der Pfeile X auf die Ausweitung 14 ein Zusammenziehen des Ringes 11, da dieser im Bereich A offen ausgebildet ist. Beim Anziehen der Schlauchklemme wird das Schlauchmaterial im Schlauchklemmenbereich verdichtet, jedoch erfolgt kein Einschneiden der Ränder 20, 120 des Schlauchklemmenringes 11 in das Material des Schlauches 30, da die beiden Ränder 20, 120 einerseits endseitig bei 21, 121 abgerundet und andererseits seitlich schräg nach außen verlaufend zur eigentlichen Ringebene abgebogen, d. h. hochgestellt, sind, wodurch abgerundete Übergangsbereiche 20b, 120b zwischen den Randabschnitten 20a, 120a und dem Ringkörpersteg 11b erhalten werden, so daß ein gleichmäßiger Übergang im Preßbereich der Schlauchklemme 10 zum Schlauchmaterial erreicht wird. Das Schlauchmaterial paßt sich der Formgebung des Ringes 11 der Schlauchklemme 10 an, so daß es, auch wenn der mit einer Schlauchklemme befestigte Schlauch Schwingungen unterworfen ist, zu keinen Beschädigungen des Schlauches kommen kann.

Der Schlauchklemmenring 11 kann auch mit einer größeren Anzahl von ohrförmigen Ausbiegungen versehen sein. Ist der Ring 11 mit mehr als einer Ausbiegung 14 versehen, dann ist er so ausgebildet, daß eine der Anzahl der Ausbiegungen entsprechende Anzahl von Klemmenteilen 12 vorliegt, damit der Schlauch im Bereich der Ausbiegungen unterhalb dieser abgedeckt ist.

### Patentanspruch

Ringförmige Schlauchklemme (10) aus einem Blechstreifen oder einem anderen geeigneten Werkstoff, der zu einem über den Schlauch schiebbaren Ring (11) mit mindestens einer ohrenförmigen Ausbiegung (14) von etwa quadratischem oder rechteckförmigem Querschnitt und mit einem den Schlauch unterhalb der Ausbiegung (14) überdeckenden Klemmenteil (12) zusammengebogen ist, dessen freies Ende (12a) an der Innenwandfläche des Ringes (11) verschieblich gehalten ist, wobei das freie Ende (13a) des die Ausbiegung (14) tragenden Klemmenteiles (13) mit dem Ringkörper fest verbunden ist, und dessen beide Ränder seitlich, schräg nach außen verlaufen dadurch gekennzeichnet, daß zur Vermeidung einer Materialbrüchigkeit des Schlauches die beiden Ränder (20, 120) des Ringes (11) unter Ausbildung eines etwa U-förmigen Querschnittprofils aus der von dem Blechstreifen des Ringes (11) gebildeten Ebene unter Ausbildung abgerundeter Übergangsbereiche (20b, 120b) zwischen den Ringrandabschnitten (20a, 120a) und dem Ringkörpersteg (11b) abgebogen sind, wobei die Enden der abgewinkelten Randabschnitte (20a, 120a) abgerundet ausgebildet sind.

### Claim

Annular hose clamp (10) of a strip of sheet steel or other adequate material, which is bent together to form a ring (11) which can be slid over the hose, with a least one ear shaped bend (14) of roughly square or rectangular cross section and with a clamp part (12) covering the hose under the bend (14), the free end (12a) of which is movable on the inner wall surface of the ring (11), the free end (13a) of the clamp part (13) supporting the bend (14) being firmly linked with the ring and the two edges of which run laterally and diagonally outwards, characterized in that, in order to avoid the hose material becoming brittle the two edges (20, 120) of the ring (11) are bent by forming a roughly U-shaped cross section from the plane formed by the sheet steel strip of the ring (11) by forming rounded transitional areas (20b, 120b) between the marginal sections of the ring (20a, 120a) and the plate (11b) of the ring, the ends of the angled marginal sections (20a, 120a) being rounded.

### Revendication

Collier de serrage annulaire (10) en ruban de tôle ou en un autre matériau approprié qui est recourbé en un anneau (11) que l'on peut faire glisser sur le tuyau comprenant au moins un pli (14) en forme d'oreille de section à peu près carrée ou rectangulaire et un élément de serrage (12) recouvrant le tuyau en dessous du pli (14), élément de serrage dont l'extrémité libre (12a) est maintenue de manière coulissante sur la surface de la paroi intérieure de l'anneau (11), l'extrémité libre (13a) de l'élément de serrage (13) portant le pli (14) étant reliée de manière solide au corps annulaire et à ses deux bords, caractérisé en ce que, pour éviter la fragilité du matériau, les deux bords (20, 120) de l'anneau (11) sont recourbés en formant un profil de section approximativement en forme de U allant latéralement en biais vers l'extérieur à partir du plan formé par le ruban de tôle de l'anneau (11) en formant des zones de transition arrondies (20b, 120b) entre les portions marginales (20a, 120a) de l'anneau et le dos (11b) du corps de l'anneau, les extrémités des portions marginales (20a, 120a) pliées en U étant de forme arrondie.

FIG.1

FIG.2

FIG. 3